# DEMANDE DE BREVET EUROPEEN

(11) **EP 4 592 109 A1**
(43) Date de publication de la demande: **30.07.2025**
(21) Numéro de dépôt: 25153371.7
(22) Date de dépôt: 22.01.2025
(51) Int. Cl.: B60H 1/32, B60K 1/00, F04D 29/62, F01C 21/00

(54) **CARTER POUR COMPRESSEUR ÉLECTRIQUE DE VÉHICULE AUTOMOBILE ÉLECTRIQUE OU HYBRIDE**

(30) Priorité: 26.01.2024 FR 2400785
(71) Demandeur: Ampere SAS, 92100 Boulogne-Billancourt (FR)
(72) Inventeur: BUFFETAUD, Julien, 78280 GUYANCOURT (FR); EVEN, Franck, 78280 GUYANCOURT (FR); MEZIERES, Richard, 78280 GUYANCOURT (FR)
(74) Mandataire: Renault Group

(57) **Abrégé**

Carter pour compresseur électrique, comprenant un corps (8) et au moins un moyen de levage (9) pour la manipulation du compresseur s'étendant depuis le corps (8) et faisant saillie vers l'extérieur du carter (7), le corps (8) et le moyen de levage (9) étant monoblocs.

## Description

### Domaine technique

La présente invention concerne les véhicules automobiles hybrides et électriques, et plus particulièrement, le groupe motopropulseur électrique des véhicules automobiles hybrides et électriques.

Plus précisément, l'invention concerne un carter pour compresseur électrique, un ensemble de compresseur électrique comprenant un tel carter et un compresseur électrique positionné dans le carter, un groupe motopropulseur électrique comprenant un tel ensemble de compresseur électrique ainsi qu'un véhicule automobile hybride ou électrique incorporant un tel groupe motopropulseur électrique.

### Techniques antérieures

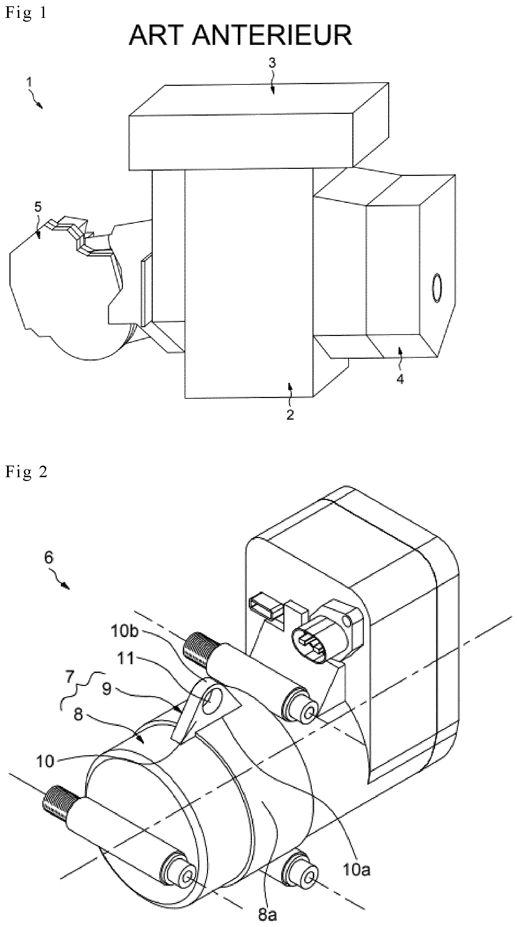

En référence à la figure 1, un groupe motopropulseur électrique 1 existant pour véhicule automobile électrique ou hybride comprend un moteur électrique 2 surmonté d'un onduleur 3, ainsi qu'un réducteur 4 et un compresseur électrique 5 respectivement fixés de part et d'autre de l'unité formée par le moteur électrique 2 et l'onduleur 3.

Un premier anneau de levage vissé sur le réducteur 4 et un deuxième anneau de levage vissé sur le moteur électrique 2 permettent l'arrimage d'un crochet de levage afin de pouvoir soulever et manipuler le groupe motopropulseur électrique à l'aide d'une machine de levage destinée à soulever des charges.

Cependant, les avancées réalisées ces dernières années sur la technologie des motorisations électriques ont conduit à des groupes motopropulseurs électriques plus petits, principalement en largeur.

A l'inverse, le volume du compresseur électrique a augmenté considérablement compte tenu de l'évolution du besoin en gestion thermique des systèmes de climatisation et de pompe à chaleur dans les véhicules électriques et hybrides, et de l'évolution des technologies du compresseur électrique, comme l'introduction du compresseur électrique CO₂.

En conséquence de ces modifications de dimensions, le centre de gravité du groupe motopropulseur électrique est modifié et l'implantation des anneaux de levage n'est plus optimal.

### Exposé de l'invention

La présente invention a donc pour but de pallier les inconvénients précités et de fournir un groupe motopropulseur électrique pour véhicule automobile électrique ou hybride permettant un levage optimisé en fonction de son centre de gravité.

La présente invention a pour objet un carter pour compresseur électrique, comprenant un corps et au moins un moyen de levage pour la manipulation du compresseur s'étendant depuis le corps et faisant saillie vers l'extérieur du carter, le corps et le moyen de levage étant monoblocs.

Dans un mode de réalisation, un ou plusieurs dudit au moins un moyen de levage peut être formé par une patte comportant au moins un orifice et formant un anneau de levage.

Avantageusement, la patte peut être de forme générale triangulaire, comportant une base raccordée au corps et un sommet traversé par l'orifice.

Selon une caractéristique, le corps peut comprendre au moins une portion tubulaire, ledit moyen de levage étant positionné sur la portion tubulaire.

Selon une caractéristique, le plan passant par la patte est parallèle à l'axe de révolution de la portion tubulaire du corps.

De préférence, le plan passant par la patte passe par l'axe de révolution de la portion tubulaire du corps.

L'invention se rapporte également à un ensemble de compresseur électrique pour véhicule automobile électrique ou hybride, comprenant un carter comme précédemment décrit et un compresseur électrique positionné dans ledit carter.

L'invention concerne aussi un groupe motopropulseur électrique pour véhicule automobile électrique ou hybride, comprenant un carter pour compresseur électrique comme précédemment décrit et/ou un ensemble de compresseur électrique comme précédemment décrit.

Dans un mode de réalisation, le groupe motopropulseur électrique peut comprendre un moteur électrique, un onduleur fixé sur le moteur électrique, un ensemble de compresseur comme précédemment décrit et un réducteur, ledit ensemble de compresseur et le réducteur étant respectivement fixés de part et d'autre d'une unité formée par le moteur électrique et l'onduleur, et le réducteur comprenant au moins un moyen de levage.

L'invention se rapporte également à un véhicule automobile électrique ou hybride comprenant un groupe motopropulseur électrique comme précédemment décrit.

### Brève description des dessins

La présente invention sera mieux comprise et d'autres buts, avantages et caractéristiques ressortiront de la description détaillée qui va suivre, comprenant des modes de réalisation donnés à titre purement illustratif et faite en référence aux dessins annexés, présentés en tant qu'exemples non limitatifs, qui pourront servir à compléter la compréhension de l'invention et l'exposé de sa réalisation et, le cas échéant, contribuer à sa définition, sur lesquels :
[Fig 1] représente un groupe motopropulseur électrique pour véhicule automobile hybride ou électrique selon l'art antérieur.
[Fig 2] illustre un ensemble de compresseur électrique pour un groupe motopropulseur électrique de véhicule automobile hybride ou électrique selon un mode de réalisation de l'invention.

Dans la description de l'invention qui va être faite, l'expression « au moins un » utilisée doit être considérée comme équivalente à l'expression « un ou plusieurs ».

### Exposé détaillé d'au moins un mode de réalisation

La figure 2 illustre un ensemble de compresseur électrique 6 pour un groupe motopropulseur électrique de véhicule automobile électrique ou hybride selon un mode de réalisation de l'invention.

L'ensemble de compresseur électrique 6 comprend un carter 7 de compresseur électrique et un compresseur électrique non visible sur la figure 2, positionné à l'intérieur du carter 7.

Le carter 7 comprend un corps 8 renfermant au moins partiellement le compresseur électrique et un moyen de levage 9 destiné à la manipulation du groupe motopropulseur électrique.

Dans l'exemple illustré, le carter 7 comprend un unique moyen de levage 9.

En variante, le carter 7 peut comprendre plusieurs moyens de levage 9.

Le moyen de levage 9 s'étend depuis le corps 8 du carter 7 et fait saillie vers l'extérieur du carter 7.

La présence d'un moyen de levage sur le carter 7 permet l'arrimage d'un outil de levage, tel qu'un crochet de levage, d'une machine de levage destinée à soulever des charges.

De manière avantageuse, le corps 8 et le moyen de levage 9 sont monoblocs.

Le caractère monobloc permet de fabriquer rapidement et simplement le carter 7 de compresseur électrique et le moyen de levage 9 en une seule et même étape, sans qu'il soit nécessaire de prévoir des étapes de fabrication supplémentaires suivant la fabrication du carter 7, telles que des étapes d'usinage d'un alésage et de taraudage pour l'utilisation d'un moyen de levage vissé.

De plus, il est possible de procéder rapidement et aisément au levage du groupe motopropulseur électrique sans qu'il soit nécessaire de monter puis démonter le moyen de levage.

Dans le mode de réalisation illustré, le moyen de levage est formé par une patte 10 comportant au moins un orifice 11. La patte 10 perforée forme ainsi un anneau de levage.

L'orifice 11 permet par exemple l'arrimage d'un crochet de levage d'une machine de levage.

Comme cela est représenté sur la figure 2, la patte 10 peut être de forme générale triangulaire, comportant une base 10a raccordée au corps 8 et un sommet 10b traversé par l'orifice 11.

La forme triangulaire de la patte 10 permet de limiter le volume de matière utilisé pour la fabrication du moyen de levage 9 tout en garantissant un ancrage solide et fiable au corps 8 du carter 7 grâce à la base 10a.

Le corps 8 du carter 7 comprend une partie inférieure destinée à être positionnée en regard d'une surface de roulement lorsque le groupe motopropulseur électrique est disposé dans un véhicule automobile électrique ou hybride, et une partie supérieure opposée à la partie inférieure.

Par surface de roulement, on entend une surface sur laquelle reposent les roues du véhicule automobile électrique ou hybride et sur laquelle le véhicule automobile électrique ou hybride est destiné à rouler.

Afin de faciliter la manipulation et le levage de l'ensemble de compresseur électrique, le moyen de levage 9 est positionné sur la partie supérieure du corps 8 du carter 7.

Dans l'exemple illustré, le corps 8 comprend une portion tubulaire 8a.

Selon une caractéristique, le plan général passant par la patte 10 peut être parallèle à l'axe de révolution de la portion tubulaire 8a du corps 8.

Dans l'exemple illustré, le moyen de levage 9 est positionné sur la portion tubulaire 8a du corps 8 et le plan passant par la patte 10 passe avantageusement par l'axe de révolution de la portion tubulaire 8a du corps 8.

Selon un exemple, un groupe motopropulseur électrique peut comprendre un moteur électrique, un onduleur fixé sur le moteur électrique, un réducteur et un ensemble de compresseur 6 tel que précédemment décrit, incorporant un ou plusieurs moyens de levage 9.

Avantageusement, l'ensemble de compresseur 6 et le réducteur peuvent être respectivement fixés de part et d'autre d'une unité formée par le moteur électrique et l'onduleur.

De préférence, le réducteur comprend également au moins un moyen de levage.

Le moyen de levage du réducteur peut être un moyen de levage réalisé d'un seul tenant avec un carter du réducteur ou être un moyen de levage fixé sur le carter du réducteur.

La présence d'un moyen de levage 9 selon l'invention sur l'ensemble compresseur du groupe motopropulseur électrique permet d'équilibrer le levage. La manipulation du groupe motopropulseur électrique est optimisée en fonction de son centre de gravité.

## Revendications

1. Carter pour compresseur électrique, comprenant un corps (8) et au moins un moyen de levage (9) pour la manipulation du compresseur s'étendant depuis le corps (8) et faisant saillie vers l'extérieur du carter (7), le corps (8) et le moyen de levage (9) étant monoblocs.

2. Carter selon la revendication 1, dans lequel ledit moyen de levage (9) est formé par une patte (10) comportant au moins un orifice (11) et formant un anneau de levage.

3. Carter selon la revendication 2, dans lequel la patte (10) est de forme générale triangulaire, comportant une base (10a) raccordée au corps (8) et un sommet (10b) traversé par l'orifice (11).

4. Carter selon l'une quelconque des revendications précédentes, dans lequel le corps (8) comprend au moins une portion tubulaire (8a), ledit moyen de levage (9) étant positionné sur la portion tubulaire (8a).

5. Carter selon la revendication 4, dans lequel le plan passant par la patte (10) est parallèle à l'axe de révolution de la portion tubulaire (8a) du corps (8).

6. Carter selon la revendication 5, dans lequel le plan passant par la patte (10) passe par l'axe de révolution de la portion tubulaire (8a) du corps (8).

7. Ensemble de compresseur électrique pour véhicule automobile électrique ou hybride, comprenant un carter (7) selon l'une quelconque des revendications précédentes et un compresseur électrique positionné dans ledit carter (7).

8. Groupe motopropulseur électrique pour véhicule automobile électrique ou hybride, comprenant un carter (7) pour compresseur électrique selon l'une quelconque des revendications 1 à 6 et/ou un ensemble de compresseur électrique (6) selon la revendication 7.

9. Groupe motopropulseur électrique selon la revendication 8, comprenant un moteur électrique, un onduleur fixé sur le moteur électrique, un ensemble de compresseur (6) selon la revendication 7 et un réducteur, ledit ensemble de compresseur (6) et le réducteur étant respectivement fixés de part et d'autre d'une unité formée par le moteur électrique et l'onduleur, et le réducteur comprenant au moins un moyen de levage.

10. Véhicule automobile électrique ou hybride comprenant un groupe motopropulseur électrique selon la revendication 8 ou 9.
